# FASCICULE DE BREVET EUROPEEN

(11) **EP 0 677 720 B1**
(45) Date de publication et mention de la délivrance du brevet: **25.08.1999**
(21) Numéro de dépôt: 95420086.1
(22) Date de dépôt: 06.04.1995
(51) Int. Cl.: G01B 11/24

(54) **Dispositif pour effectuer la mesure d'un profil sur une surface plane**
Vorrichtung zur Profilmessung einer ebenen Oberfläche
Device for performing profile measurement of a plane surface

(30) Priorité: 12.04.1994 FR 9404672
(43) Date de publication de la demande: 18.10.1995
(73) Titulaire: CENTRE TECHNIQUE DE L'INDUSTRIE DES PAPIERS CARTONS ET CELLULOSES ., 38100 Grenoble (FR)
(72) Inventeur: Sabater, Jacques, F-91190 Gif sur Yvette (FR); Eymin Petot Tourtollet, Guy, F-38570 Tencin (FR); Jayet, Gérard, F-38690 Oyeu (FR)
(74) Mandataire: Vuillermoz, Bruno

(56) Documents cités:
- EP-A- 0 532 257
- WO-A-89/02573
- DE-A- 4 129 820
- US-A- 5 090 811
- US-A- 5 118 192
- PATENT ABSTRACTS OF JAPAN vol. 14 no. 340 (P-1080) ,23 Juillet 1990 & JP-A-02 116703 (MATSUSHITA ELECTRIC IND. CO. LTD.)

## Description

L'invention concerne un nouveau dispositif destiné à permettre la réalisation de la mesure de profils, en creux ou en relief sur une surface plane d'un matériau papier ou carton.

Plus spécifiquement, l'invention propose un dispositif susceptible de mesurer et de déterminer les caractéristiques d'un bourrelet au sein d'une feuille de papier ou carton.

Bien que plus particulièrement décrite avec un dispositif de mesure des caractéristiques du bourrelet d'une feuille de papier ou de carton, l'invention ne saurait se limiter à cette seule application, et tout dispositif susceptible de permettre la mesure de tout profil en creux ou en relief par rapport à une surface plane d'un matériau papier ou carton est couvert par la portée de la présente invention.

De manière définie, le bourrelet est constitué par la déformation résiduelle d'une feuille de carton ou de papier sous l'action d'un outil de rainage constitué d'une matrice, dénommée contre-partie et d'un poinçon, dénommé filet raineur, de forme correspondante. Le rainage des feuilles de carton ou de papier est destiné à permettre le pliage desdites feuilles en vue de la réalisation notamment d'emballages.Cette technique est aujourd'hui largement connue, de sorte qu'il n'y a pas lieu de la décrire ici plus en détail.

Bien que largement connue et utilisée, cette technique présente dans son application quelques imperfections. En effet, les utilisateurs de celle-ci souhaitent pouvoir disposer d'un organe ou d'un dispositif susceptible de permettre le contrôle de la qualité et de l'uniformité du bourrelet obtenu, afin justement soit de corriger l'action des outils de rainage utilisés, soit d'éliminer les feuilles de carton à bourrelets impropres ou de caractéristiques incorrectes, pour justement permettre de faciliter l'opération ultérieure de pliage, voire de collage.

Or, actuellement, le conducteur de la machine au niveau de laquelle sont montés les outils de rainage, conduit sa machine avec comme seule référence de qualité l'appréciation visuelle du bourrelet.

Compte-tenu des dimensions de celui-ci, à savoir typiquement une largeur comprise entre 700 µm et 2 millimètres, et une hauteur comprise entre 10 µm et 200 µm, on conçoit la relativité d'une telle appréciation, de sorte que ce contrôle visuel n'est pas aujourd'hui satisfaisant.

L'objet de l'invention est de proposer un appareil ou dispositif susceptible de mesurer de manière beaucoup plus précise les différentes caractéristiques de ce bourrelet, et notamment sa hauteur par rapport au plan général de la surface de la feuille carton de papier, sa largeur et éventuellement son décentrage, c'est à dire sa symétrie ou sa non-symétrie par rapport à la médiatrice de la courbe plus ou moins parabolique du profil.

On a décrit dans le document EP-A-0 532 257, un dispositif pour déterminer la qualité d'un cordon de soudure entre deux plaques métalliques, mettant en oeuvre un système optique et un organe de traitement de signaux optiques issus de l'éclairage dudit cordon.

Cependant, ce dispositif est monté de manière fixe juste en aval de la tête de soudure et ne permet pas un ajustement de son positionnement immédiat, par absence de visualisation en temps réel de l'image restituée par le système optique.

Le dispositif conforme à l'invention, est destiné à effectuer en continu ou isolément la mesure d'un profil en creux ou en relief ménagé ou réalisé au sein d'une surface plane d'un matériau diffusant papier ou carton s'affranchissant de ces inconvénients . Il se caractérise en ce qu'il comprend :
- une tête de mesure préhensile, comprenant :
   . une source de lumière associée à une lentille - objectif, destinée à transformer le faisceau issu de la source en une image en forme de raie lumineuse perpendiculaire au profil à mesurer, l'orientation dudit faisceau lumineux étant réalisée selon un angle d'incidence, dont la valeur est voisine de l'angle de Brewster correspondant à l'indice du matériau ;
   . un organe de focalisation de la lumière rétrodiffusée par la surface ainsi éclairée, et notamment par le profil ;
   . une caméra matricielle, au niveau de laquelle est focalisée ladite lumière rétrodiffusée, transformant les signaux analogiques reçus en signaux numérique ;
- un ensemble de traitement connecté à la tête de mesure comprenant un calculateur, et destiné à partir des signaux numériques transmis par la caméra, à extraire au moins l'une des caractéristiques définissant le profil, à savoir sa hauteur définie par rapport au plan de référence constitué par la surface elle-même, sa largeur et/ou son décentrage ;
- un organe de restitution sensorielle, destiné à permettre la visualisation des informations extraites de la caméra par ledit ensemble.

En d'autres termes, l'invention consiste, par des moyens optiques et électroniques, à déterminer de façon simple et aisée les caractéristiques du profil, à obtenir celles-ci de manière quasiment instantanée et à permettre la visualisation du positionnement correct de ladite tête en temps réel. Par ailleurs, compte tenu de l'angle d'incidence du faisceau lumineux sur le support analysé, on évite la réflexion spéculaire.

Pour une feuille de papier ou de carton, la valeur de l'indice est de l'ordre de 1,5, l'angle de Brewster est voisin de 56 °.

Selon une autre caractéristique avantageuse de l'invention, la source de lumière est polarisée rectilignement et sa direction de polarisation est parallèle au plan d'incidence des rayons lumineux sur le matériau.

Selon une autre caractéristique avantageuse de l'invention, la caméra matricielle est constituée par une caméra associée à un circuit à transfert de charges, dont la définition est au moins égale à 512 x 512 pixels, et avantageusement munie d'un réglage du gain électronique.

Selon l'invention, l'ensemble des différents éléments constitutifs de la tête de lecture sont centralisés au sein d'un boîtier de forme parallélipipédique, dont on réduit avantageusement les dimensions en ménageant un miroir entre l'organe de focalisation et la caméra.

Par ailleurs, afin de faciliter la manipulation lors de la mesure du bourrelet, le boîtier renfermant la tête de lecture est de forme ergonomique, comportant un socle muni d'une fenêtre traversante, et une partie mobile, articulée sur ledit socle, et comportant la tête de lecture proprement dit.

L'organe de restitution sensorielle destiné à permettre la visualisation des informations extraites de la caméra par ledit ensemble, et constitué par un écran vidéo, permet également la représentation graphique du profil analysé.

Avantageusement, l'ensemble du traitement est constitué par un micro-ordinateur du type compatible ou autre.

L'invention concerne également un procédé pour effectuer en continu ou de manière discrète la mesure d'un profil en creux ou en relief ménagé ou réalisé au sein d'une surface plane d'un matériau papier ou carton. Ce procédé consiste :
- à éclairer ledit profil selon une image en forme de raie lumineuse au moyen d'une source de lumière collimatée, orientée perpendiculairement par rapport à la direction dudit profil, et selon un angle d'incidence, dont la valeur est voisine de 56° ;
- à focaliser la lumière rétrodiffusée par la surface ainsi éclairée, et notamment par le profil, au niveau d'une caméra matricielle, destinée à transformer les signaux analogiques reçus en signaux numériques ;
- à traiter ces signaux numériques de telle sorte à extraire au moins l'une des caractéristiques géométriques définissant le profil.

La manière dont l'invention peut être réalisée et les avantages qui en découlent ressortiront mieux de l'exemple de réalisation qui suit donné à titre indicatif et non limitatif à l'appui des figures annexées.

La figure 1 est une représentation schématique du principe du fonctionnement du dispositif conformément à l'invention.

La figure 2 est une représentation schématique de la tête de mesure du dispositif conforme à l'invention.

La figure 3 est une représentation schématique en coupe d'une feuille de carton munie d'un bourrelet, et matérialisant les différentes caractéristiques mesurées.

La figure 4 est une représentation schématique en perspective de la tête de mesure selon une autre forme de réalisation de l'invention.

La description qui suit se rapporte plus particulièrement à un dispositif destiné à mesurer et déterminer les caractéristiques géométriques, d'un bourrelet d'une feuille de papier ou carton. Ainsi que cela, a déjà été rappelé en préambule, cet exemple de réalisation est uniquement indicatif, mais ne saurait en aucun cas être considéré comme limitatif.

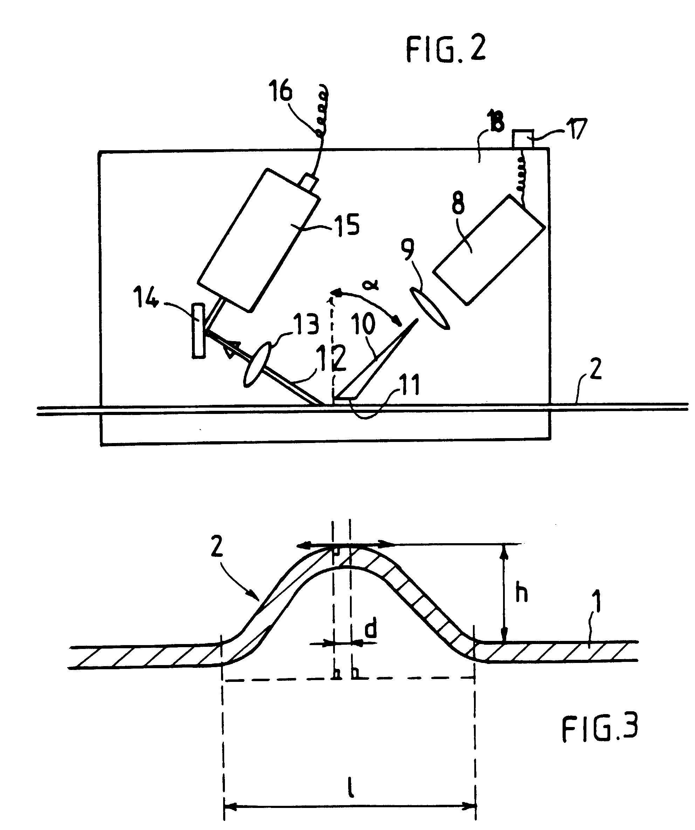

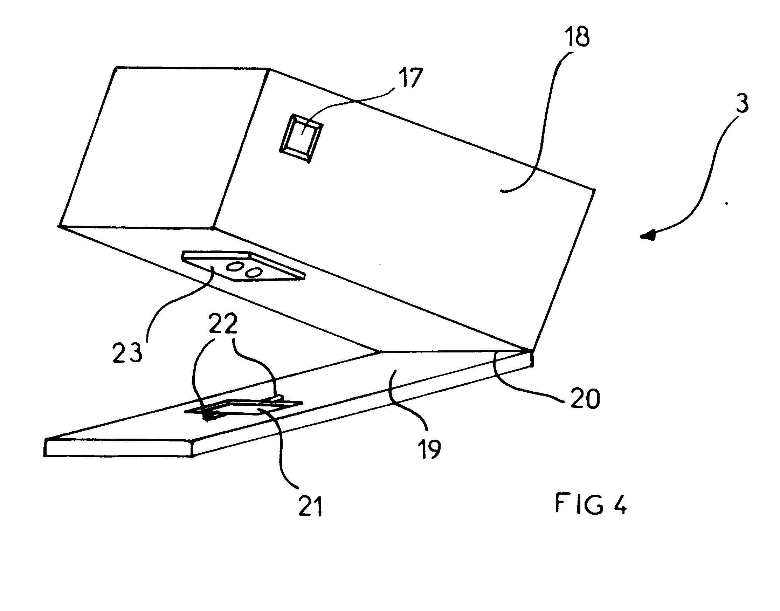

On a représenté schématiquement le principe de fonctionnement de l'installation du dispositif conforme à l'invention. Ce dispositif est fondamentalement constitué de deux parties distinctes, respectivement une tête de mesure (3), décrite en détail ultérieurement en liaison avec les figures 2 et 4, et un ensemble de traitement (4), éventuellement associé à un organe de restitution sensorielle et typiquement un écran vidéo (7).

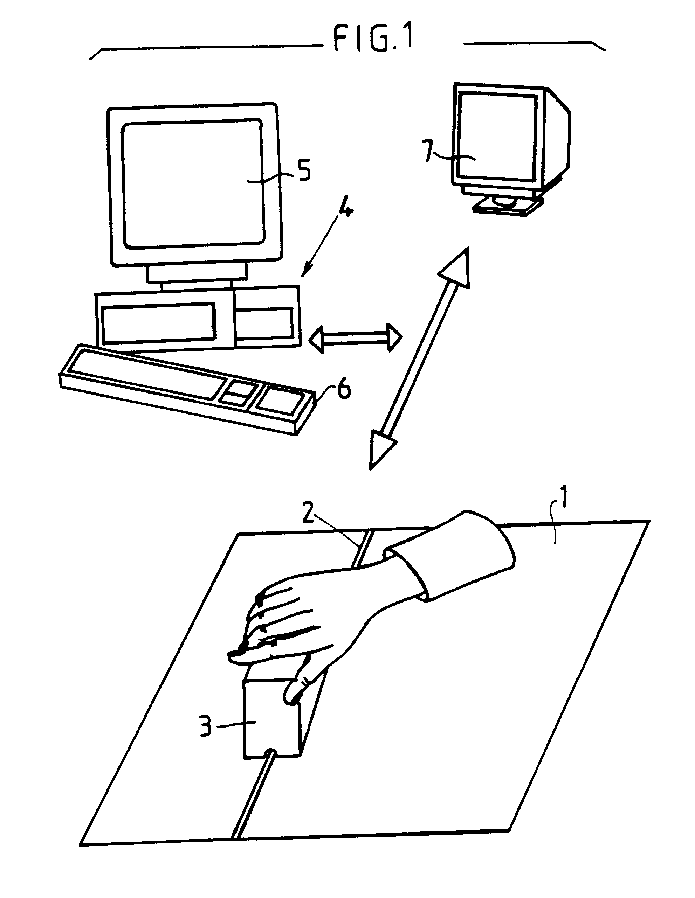

La tête de mesure (3), ainsi qu'on peut l'observer sur la figure 1 est de taille facilement préhensile, de telle sorte à pouvoir être manipulée aisément et mise en place également facilement pour permettre d'aboutir à la mesure recherchée.

Typiquement, tous les éléments qui la composent sont sélectionnés avec un souci de réduction maximum de la taille de cette tête de mesure et de faible poids (3). Celui-ci est typiquement de 500 à 800 grammes. Cette tête de mesure (3) comprend fondamentalement un boîtier (18) de forme parallélépipédique, fermée sur toutes ses faces à l'exception de sa base, destinée à venir se positionner en regard de la feuille de papier ou de carton au niveau du bourrelet, ainsi qu'il sera décrit ultérieurement.

Elle comprend tout d'abord une source de lumière collimatée (8) et notamment une diode laser de faible puissance, typiquement inférieure à 3 mW, émettant un rayonnement électro-magnétique dans le domaine du visible, par exemple à 675 nanomètres. De fait, compte-tenu du choix de la longueur d'onde et de la puissance émise, on peut utiliser la tête de mesure en toute sécurité, vérifier de manière simple les tests de fonctionnement et favoriser le positionnement de la tête (3) au niveau du papier (1).

Cette diode laser est alimentée au moyen d'une alimentation stabilisée miniature, fonctionnant sur une tension compatible avec les tensions disponibles avec l'ensemble de traitement décrit en détail ci-après.

Le faisceau issu de la diode laser (8) traverse ensuite une lentille plano-cylindrique de distance focale - 6,35 mm, dont la fonction réside dans la transformation dudit faisceau laser en un faisceau (10) se traduisant au niveau du bourrelet (2) analysé en une ligne (11) perpendiculaire audit bourrelet.

Le faisceau (12), rétrodiffusé par le bourrelet et la feuille de papier éclairée par cette ligne (11), transite à travers un objectif (13) de distance focale de 12,5 mm, focalisant ce faisceau (12) sur la matrice d'une caméra (15), typiquement une caméra CCD ou à transfert de charges, présentant une définition au moins égale à 512 x 512 pixels.

Avantageusement et dans un souci de compactage, on interpose entre l'objectif (13) et la caméra (15) un miroir (14) orienté sensiblement à 45 ° par rapport au faisceau émergent (12).

Par construction, la distance entre la lentille piano-cylindrique (9) et la surface de la feuile de papier à analyser détermine la longeur de la ligne lumineuse (11) d'éclairage du bourrelet.

Parallèlement, l'angle d'émission et de réception du faisceau respectivement (10) et (12) par rapport au plan de la feuille est déterminé pour éviter au maximum la réflexion spéculaire. Pour le papier et le carton, cet angle est d'environ 56°.

Enfin, la tête de mesure comporte un bouton poussoir (17), actionné par l'utilisateur, destiné à permettre l'acquisition des données, c'est à dire l'acquisition et le traitement par le micro-ordinateur associé d'une image vidéo.

De par sa structure, cette tête de mesure présente une grande stabilité et est en outre conçue de telle sorte à être étanche à la poussière, et ce pour ne pas s'exposer à l'environnement externe l'intérieur de la tête, à l'exception de la surface externe de l'objectif (13) et de la lentille plano-cylindrique (9), l'accès à ces deux surfaces étant en outre facilité pour en assurer le nettoyage éventuel.

On a représenté sur la figure 4 une autre forme de réalisation de la tête de mesure. Si la structure interne de cette tête demeure la même, notamment en terme de chemins et composants optiques, le boîtier externe est constitué de deux parties, à savoir le boîtier proprement dit (18) articulé sur un socle plan (19) au niveau de l'une des extrémités de sa base selon un axe d'articulation (20). Au repos, c'est à dire en l'absence de toute contrainte extérieure exercée notamment par l'utilisateur, le boîtier (18) se présente en position ouverte, tel que matérialisé sur la figure 4. A cet effet, l'ensemble socle (19) - boîtier (18) est par exemple muni d'un ressort (non représenté) induisant le maintien dans cette position, à l'instar d'une agrafeuse.

Ainsi qu'on peut l'observer, le socle (19) comporte une fenêtre traversante (21) de visualisation, munie de repères de centrage (22), destinés à permettre à l'opérateur d'effectuer un positionnement correct de la tête de mesure au niveau du bourrelet à analyser. Ces repères (22) sont ménagés de part et d'autre de la fenêtre (21) et sensiblement en position centrale par rapport à celle-ci.

Lorsque l'opérateur désire procéder à l'analyse d'un bourrelet, il positionne le socle (19) au niveau de la partie dudit bourrelet qu'il souhaite analyser. Pour ce faire, il utilise la fenêtre de visualisation (21) pour cadrer ledit bourrelet afin que celui-ci coïncide avec les repères de centrage (22), de telle sorte que ledit bourrelet soit perpendiculaire à la raie laser (11) émise par la tête (3) et sortant en (23) du boîtier (18). Une fois ce cadrage réalisé, l'opérateur fait basculer ledit boîtier (18) sur le socle (19) autour de l'axe d'articulation (20), de telle sorte à venir mettre en contact le boîtier (18) avec le socle (19), et plus spécifiquement, à permettre l'introduction de la zone de sortie (23) de la raie laser (11) au sein de la fenêtre (21) de visualisation. On conçoit donc, qu'à cet effet, la saillie inhérente à la zone de sortie (23) corresponde sensiblement au volume libéré par la fenêtre de visualisation (21).

Une fois le boîtier (18) ainsi basculé, l'opérateur peut vérifier le cadrage correct du bourrelet par le biais de l'écran vidéo (7), puis actionner le bouton poussoir (17) afin d'effectuer la mesure. Une fois cette mesure effectuée, l'opérateur relache le boîtier (18), celui-ci reprenant alors sa configuration initiale "ouverte".

L'ensemble de traitement (4) est destiné à exploiter les informations acquises par la caméra (15), et qui transitent à son niveau par le biais du câble coaxial (16). Typiquement, cet ensemble de traitements est constitué par un micro-ordinateur du type compatible PC, intégrant un clavier (6) et un écran (5), permettant l'installation du logiciel de traitement des données acquises.

L'acquisition de l'image captée par la caméra s'effectue au moyen d'une carte d'acquisition et de traitement intégré dans le micro-ordinateur. La synchronisation entre la caméra et la carte est assurée par la carte elle-même sur le signal vidéo reçu. Cette numérisation est effectuée sur 8 bits qui permet d'avoir 256 niveaux de gris différents.

Le logiciel intégré au micro-ordinateur est destiné à déterminer les trois grandeurs caractéristiques suivantes du bourrelet :
- tout d'abord, la largeur *l* de ce bourrelet ;
- sa hauteur *h* ;
- et enfin son décentrage *d* , le décentrage étant constitué par le décalage du point maximum de hauteur *h* du bourrelet par rapport à la médiatrice du segment de droite s'étendant entre les deux points de référence de mesure de la largeur.

Pour ce faire, le logiciel intégré dans le micro-ordinateur recherche l'ensemble des points qui marquent le plan de la feuille. Puis, il procède à la recherche et à un stockage des points lumineux qui matérialisent la forme du bourrelet. Ces points forment une courbe qui suit la forme du bourrelet. Cette courbe étant légèrement perturbée par la surface rugueuse du papier, le logiciel effectue alors un filtrage discret du premier ordre de la courbe ainsi obtenue.

Enfin, il procède à la détermination des caractéristiques de la forme analysée, notamment sa hauteur *h*, sa largeur *l* et son décentrage *d*, à partir d'une identification du début et de la fin du bourrelet, selon un modèle paramétrable.

Par exemple, les seuils définissant le début et la fin du bourrelet sont détectés lorsque les points mesurés dépassent de 40 µm en ordonnée par rapport au plan de référence déjà déterminé et correspondant au plan supérieur de la feuille (1). De ces deux seuils on peut ainsi déduire la largeur *l* et le décentrage *d*. Ces trois résultats s'affichent au niveau de l'écran (5) du micro-ordinateur.

Ainsi donc, lorsque le conducteur de la machine de rainurage veut procéder à une analyse de bourrelets, il positionne la tête de mesure (3) sur la feuille (1) au niveau du bourrelet (2), ainsi qu'on l'a représenté sur la figure 1, puis par le biais du bouton poussoir (17), il procède au déclenchement de la mesure, le positionnement de la tête de mesure sur l'échantillon étant en outre facilité par l'écran vidéo (7).

Après chaque mesure, l'opérateur peut avoir selon son désir, soit une présentation résumée de la mesure, qui comprend :
- le rappel des gabarits fixés (hauteur, largeur, décentrage et tolérance) ;
- les trois résultats issus de la mesure (hauteur *h*, largeur *l* et décentrage *d*) ;
- les alarmes éventuelles de non conformité des mesures par rapport aux gabarits fixés ;
soit ces mêmes résultats assortis d'un tracé du profil du bourrelet et des variables ayant paramétrer des mesures.

La durée d'une telle mesure est d'environ 3 secondes, avec un micro-ordinateur fonctionnant avec un processeur de 386-16 Mégahertz.

Il permet ainsi de contrôler de manière simple, aisée et particulièrement rapide le profil du bourrelet.

Ainsi qu'on l'a annoncé en préambule, il peut également permettre le contrôle des matrices qui permettent la réalisation de ces creux.

Bien que dans l'exemple décrit, le dispositif de l'invention fonctionne de manière discrète, un tel dispositif est bien entendu adaptable au fonctionnement en continu, notamment sur une chaîne de fabrication d'emballages préalablement à leur pliage.

Par ailleurs, le grossissement et donc la précision de la mesure peut être modifiable en fonction des objectifs ou lentilles utilisés, ou du nombre de pixels, et donc de la résolution de la caméra.

## Revendications

1. Dispositif pour effectuer en continu ou de manière discrète la mesure d'un profil en creux ou en relief ménagé ou réalisé au sein d'une surface plane d'un matériau papier ou carton (1), ***caractérisé*** en ce qu'il comprend :
• une tête de mesure préhensile (3), comprenant :
■ une source de lumière (8), associée à une lentille - objectif (9), destinée à transformer le faisceau (10) issu de la source (8) en une image en forme de raie lumineuse (11), perpendiculaire au profil (2) à mesurer, l'orientation dudit faisceau lumineux (10) étant réalisée selon un angle d'incidence α dont la valeur est voisine de 56° ;
■ un organe de focalisation (13) de la lumière rétrodiffusée (12) par la surface (1) ainsi éclairée, et notamment par le profil (2) ;
■ une caméra matricielle (15), au niveau de laquelle est focalisée ladite lumière rétrodiffusée (12), transformant les signaux analogiques reçus en signaux numériques ;
• un ensemble de traitement (4) connecté à la tête de mesure (3), comprenant un calculateur, et destiné, à partir de signaux numériques transmis par la caméra (15), à extraire au moins l'une des caractéristiques géométriques définissant le profil (2) ;
• un organe de restitution sensorielle (7), destiné à permettre la visualisation des informations extraites de la caméra (15) par ledit ensemble.

2. Dispositif de mesure selon la revendication 1, ***caractérisé*** en ce que les caractéristiques géométriques déterminées sont constituées par la hauteur h définie par rapport au plan de référence constitué par la surface analysée (1), sa largeur ℓ et son décentrage d, défini par le décalage du point maximum de hauteur h du profil par rapport à la médiatrice du segment de droite s'étendant entre les deux points de référence de mesure de la largeur.

3. Dispositif de mesure selon l'une des revendications 1 et 2, ***caractérisé*** en ce que la source de lumière (8) est polarisée rectilignement, et en ce que sa direction de polarisation est parallèle au plan d'incidence des rayons lumineux sur ledit matériau.

4. Dispositif de mesure selon l'une des revendications 1 à 3, ***caractérisé*** en ce que la caméra matricielle (15) est constituée par une caméra associée à un circuit à transfert de charges, dont la définition est au moins égale à 512 x 512 pixels, et avantageusement munie d'un réglage du gain électronique.

5. Dispositif de mesure selon l'une des revendications 1 à 4, ***caractérisé*** en ce que l'ensemble des différents éléments (8, 9, 13, 15) constitutifs de la tête de lecture sont centralisés au sein d'un boîtier (18) de forme parallélépipèdique, intégrant un organe de déclenchement (17) de la mesure.

6. Dispositif de mesure selon la revendication 5, ***caractérisé*** en ce que le boîtier (18) est articulé selon un axe d'articulation (20) sur un socle plan (19), destiné à venir se positionner sur la surface plane à analyser au niveau du profil en creux ou en relief, ledit socle étant pourvu d'une fenêtre de visualisation (21) traversante, elle-même munie des repères (22) de centrage dudit profil en creux ou en relief, lesdits repères (22) étant orientés de telle sorte à assurer un cadrage du profil à analyser perpendiculairement à la raie lumineuse (11) émise par la source lumineuse (8).

7. Dispositif de mesure selon l'une des revendications 1 à 6, ***caractérisé*** en ce que l'on interpose entre la caméra (15) et l'organe de focalisation (13) un miroir, positionné sensiblement à 45° du faisceau émergent (12).

8. Dispositif de mesure selon l'une des revendications 1 à 7, ***caractérisé*** en ce que l'organe de restitution sensorielle (7) est constitué par un écran vidéo, permettant outre le positionnement du profil et le centrage de la tête de mesure (3) par rapport audit profil, également la représentation graphique dudit profil analysé.

9. Procédé pour effectuer en continu ou de manière discrète la mesure d'un profil en creux ou en relief ménagé ou réalisé au sein d'une surface plane d'un matériau papier ou carton (1), ***caractérisé*** par l'utilisation d'un dispositif de mesure selon l'une des revendications 1 à 8 en ce qu'il consiste :
■ à éclairer ledit profil selon une image en forme de raie lumineuse au moyen d'une source de lumière collimatée (8, 9), orientée perpendiculairement par rapport à la direction dudit profil, et selon un angle d'incidence α dont la valeur est voisine de 56°;
■ à focaliser la lumière rétrodiffusee (12) par la surface (1) ainsi éclairée, et notamment par le profil (2), au niveau d'une caméra matricielle (15), destinée à transformer les signaux analogiques reçus en signaux numériques ;
■ à traiter ces signaux numériques de telle sorte à extraire au moins l'une des caractéristiques géométriques définissant le profil (2).

10. Procédé pour effectuer en continu ou de manière discrète la mesure d'un profil en creux ou en relief ménagé ou réalisé au sein d'une surface plane d'un matériau papier ou carton (1) selon la revendication 9, ***caractérisé*** en ce qu'il consiste à visualiser le positionnement du dispositif de mesure au moyen d'un écran vidéo, préalablement à la réalisation effective de la mesure.

## Patentansprüche

1. Vorrichtung zur Durchführung einer kontinuierlichen oder diskreten Messung eines hohlen oder reliefartigen Profils, welches in einer ebenen Oberfläche eines Papier- oder Karton-Materials (1) eingebracht oder erzeugt ist, **dadurch gekennzeichnet**, daß sie folgendes umfaßt:
• einen greifbaren Meßkopf (3), mit:
■ einer Lichtquelle (8), die einem Linsenobjektiv (9) zugeordnet ist, welches zur Umwandlung des von der Quelle (8) ausgehenden Strahls (10) in eine Abbildung in Form eines Lichtstreifens (11) dient, der rechtwinklig zu dem zu vermessenden Profil (2) verläuft, wobei die Orientierung des genannten Lichtstrahls (10) gemäß einem Einfallswinkel α verwirklicht ist, dessen Wert nahe 56° liegt;
■ einem Fokussierungselement (13) für das durch die auf diese Weise beleuchtete Oberfläche (1), und insbesondere durch das Profil (2), rückgestreute Licht (12);
■ einer Matrix-Kamera (15), auf deren Ebene das genannte rückgestreute Licht (12) fokussiert ist und welche die empfangenen analogen Signale in numerische Signale umwandelt;
• eine Verarbeitungsvorrichtung (4), welche an den Meßkopf (3) angeschlossen ist, einen Rechner umfaßt und dazu bestimmt ist, ausgehend von den von der Kamera (15) übertragenen numerischen Signalen zumindest eine der das Profil (2) definierenden geometrischen Eigenschaften zu ermitteln;
• ein Element zur sensorischen Wiedergabe (7), welches dazu bestimmt ist, die Sichtbarmachung der über die Kamera (15) durch die genannte Anordnung ermittelten Informationen zu ermöglichen.

2. Meßvorrichtung nach Anspruch 1, **dadurch gekennzeichnet**, daß die ermittelten geometrischen Eigenschaften gebildet werden von der Höhe h, welche in bezug auf die durch die analysierte Oberfläche (1) gebildete Referenzebene festgelegt ist, die Breite l und die Dezentrierung d, welche definiert ist durch die Abweichung des Punktes der maximalen Höhe h des Profils in bezug auf die Mittelsenkrechte des Streckenabschnitts der Geraden, welcher sich zwischen den beiden Referenzpunkten der Breitenmessung erstreckt.

3. Meßvorrichtung nach einem der Ansprüche 1 und 2, **dadurch gekennzeichnet**, daß die Lichtquelle (8) geradlinig polarisiert ist und daß ihre Polarisierungrichtung parallel zur Einfallsebene der Lichtstrahlen auf das genannte Material ist.

4. Meßvorrichtung nach einem der Ansprüche 1 bis 3, **dadurch gekennzeichnet**, daß die Matrix-Kamera (15) durch eine Kamera mit einem ladungsgekoppelten Baustein gebildet wird, deren Auflösung mindestens 512x512 Pixel entspricht und welche vorteilhafterweise eine elektronische Verstärkungsregelung aufweist.

5. Meßvorrichtung nach einem der Ansprüche 1 bis 4, **dadurch gekennzeichnet,** daß die Gesamtheit der verschiedenen den Aufnahmekopf bildenden Elemente (8,9,13,15) in einem quaderförmigen Gehäuse (18) zusammengefaßt ist, welches ein Element (17) zur Auslösung der Messung umfaßt.

6. Meßvorrichtung nach Anspruch 5, **dadurch gekennzeichnet**, daß das Gehäuse (18) um eine Schwenkachse (20) schwenkbar an einem ebenen Sockel (19) angelenkt ist, der zur Auflage auf die zu analysierende ebene Fläche im Bereich des hohlen oder reliefartigen Profils bestimmt ist, wobei der genannte Sockel mit einem durchgehenden Sichtfenster (21) versehen ist, welches seinerseits mit Markierungen (22) zur Zentrierung des genannten hohlen oder reliefartigen Profils versehen ist, wobei die genannten Markierungen (22) derart ausgerichtet sind, daß ein Ausrichten des zu analysierenden Profils rechtwinklig zum durch die Lichtquelle (8) abgestrahlten Lichtstreifen (11) sichergestellt ist.

7. Meßvorrichtung nach einem der Ansprüche 1 bis 6, **dadurch gekennzeichnet**, daß zwischen der Kamera (15) und dem Fokussierungselement (13) ein Spiegel eingefügt ist, der im wesentlichen in einem Winkel von 45° zum nach oben verlaufenden Strahl (12) ausgerichtet ist.

8. Meßvorrichtung nach einem der Ansprüche 1 bis 7, **dadurch gekennzeichnet,** daß das Element (7) zur sensorischen Wiedergabe aus einem Video-Bildschirm besteht, der neben der Positionierung des Profils und der Zentrierung des Meßkopfes (3) in bezug auf das genannte Profil ebenfalls die graphische Darstellung des analysierten Profils ermöglicht.

9. Verfahren zur Durchführung einer kontinuierlichen oder diskreten Messung eines hohlen oder reliefartigen Profils, welches in einer ebenen Oberfläche eines Papier- oder Karton-Materials (1) eingebracht oder erzeugt ist, **dadurch gekennzeichnet**, daß es zur Verwendung einer Meßvorrichtung gemäß einem der Ansprüche 1 bis 8 folgendes umfaßt:
■ Beleuchten des genannten Profils mit einer Abbildung in Form eines rechtwinklig in bezug auf die Richtung des Profils ausgerichteten Leuchtstreifens mittels einer Quelle (8, 9) parallelen Lichtes mit einem Einfallswinkel α, dessen Wert nahe 56° liegt;
■ Fokussieren des durch die so beleuchtete Oberfläche (1), insbesondere durch das Profil (2), rückgestrahlten Lichtes (12) auf die Ebene einer Matrix-Kamera (15), welche zur Umwandlung der empfangenen analogen Signale in numerische Signale bestimmt ist;
■ Verarbeiten der numerischen Signale derart, daß mindestens eine der das Profil (2) definierenden geometrischen Eigenschaften ermittelt wird.

10. Verfahren zur Durchführung einer kontinuierlichen oder diskreten Messung eines hohlen oder reliefartigen Profils, welches in einer ebenen Oberfläche eines Papier- oder Karton-Materials (1) eingebracht oder erzeugt ist, nach Anspruch 9, **dadurch gekennzeichnet,** daß es die Sichtbarmachung der Positionierung der Meßvorrichtung mittels eines Video-Bildschirmes vor der tatsächlichen Durchführung der Messung umfaßt.

## Claims

1. A device for the continuous or discrete measurement of an indented or relief profile contrived or made within a plane surface of a paper or board material (1), characterized in that it comprises :
- a graspable measurement head (3) comprising :
· a light source (8), associated with an objective lens (9), intended to convert the beam (10) emanating from the source (8) into an image in the form of a luminous streak (11), perpendicular to the profile (2) to be measured, the orienting of said light beam (10) being effected at an angle of incidence α whose value is close to 56° ;
· a unit (13) for focusing the backscattered light (12) from the surface (1) thus illuminated, and especially from the profile (2) ;
· a matrix camera (15), at which said backscattered light (12) is focused, converting the analog signals received into digital signals ;
- a processing assembly (4) linked to the measurement head (3), comprising a calculator and intended, from the digital signals transmitted by the camera (15), to extract at least one of the geometrical characteristics defining the profile (2) ;
- a sensory restore unit (7) intended to allow the viewing of the information extracted from the camera (15) by said assembly.

2. The measurement device as claimed in claim 1, wherein the specified geometrical characteristics consist of the height *h* defined with respect to the reference plane consisting of the examined surface (1), its width *l*, and its off-centering *d*, defined by the offset of the point of maximum height *h* of the profile with respect to the mediator of the straight line segment stretching between the two reference points for measuring the width.

3. The measurement device as claimed in one of claims 1 to 2, wherein the light source (8) is linearly polarized and wherein its direction of polarization is parallel to the plane of incidence of the light rays on said material.

4. The measurement device as claimed in one of claims 1 to 3, wherein the matrix camera (15) consists of a camera associated with a charge transfer circuit, whose definition is at least equal to 512 x 512 pixels, and advantageously furnished with electronic gain control.

5. The measurement device as claimed in one of claims 1 to 4, wherein the assembly of the various elements (8,9,13,15) making up the reading head are centralized within a housing (18) of parallelepipedal shape, incorporating a unit (17) for triggering the measurement.

6. The measurement device as claimed in claim 5, wherein the housing (18) is hinged along a hinging axis (20) to a flat plinth (19), intended to come into position on the plane surface to be examined level with the indented or relief profile, said plinth being provided with a through viewing window (21), itself furnished with tags (22) for centering said indented or relief profile, said tags (22) being oriented in such a way as to ensure framing of the profile to be examined perpendicularly to the luminous streak (11) emitted by the light source (8).

7. The measurement device as claimed in one of claims 1 to 6, wherein a mirror, positioned substantially at 45° to the emergent beam (12), is interposed between the camera (15) and the focusing unit (13).

8. The measurement device as claimed in one of claims 1 to 7, wherein the sensory restore unit is a videoscreen allowing the positioning of the profile and the centering of the measurement head (3) with respect to said profile, and also the graphical representation of the profile examined.

9. A method for realizing in a continuous or discrete manner the measurement of an indented or relief profile contrived or made within a plane surface of a paper or board (1) for implementing a measurement device according one of the claims 1 to 8, characterized in that it consists in :
- illuminating said profile by an image in the form of a luminous streak by means of a collimated light source (8,9), oriented in a perpendicular manner to the direction of said profile, and at an angle of incidence whose value is close to 56° ;
- focusing the backscattered light (12) from the illuminated surface (1), and namely from the profile (2) on a matrix camera (15) intended to convert the analog signals received into digital signals ;
- treating said digital signals in order to extract at least one of the geometrical characteristics defining the profile (2).

10. A method for realizing in a continuous or discrete manner the measurement of an indented or relief profile contrived or made within a plane surface of a paper or board (1) according to claim 9, wherein it consists in viewing the positioning of the measurement device by means of a video screen, before realizing the effective measure.
